# EUROPÄISCHE PATENTSCHRIFT

(11) **EP 1 037 791 B1**
(45) Veröffentlichungstag und Bekanntmachung des Hinweises auf die Patenterteilung: **14.05.2003**
(21) Anmeldenummer: 99957854.5
(22) Anmeldetag: 04.10.1999
(51) Int. Cl.: B62D 1/184

(54) **VERRIEGELUNGSVORRICHTUNG FÜR EINE IN HÖHE UND NEIGUNG EINSTELLBARE KRAFTFAHRZEUGLENKSÄULE**
LOCKING DEVICE FOR A HEIGHT AND TILT ADJUSTABLE STEERING COLUMN IN A MOTOR VEHICLE
DISPOSITIF DE VERROUILLAGE POUR UNE COLONNE DE DIRECTION DE VEHICULE, REGLABLE EN HAUTEUR ET EN INCLINAISON

(30) Priorität: 08.10.1998 DE 19846292
(43) Veröffentlichungstag der Anmeldung: 27.09.2000
(73) Patentinhaber: NACAM Deutschland GmbH, 49448 Lemförde (DE)
(72) Erfinder: BÄR, Andreas, 28779 Bremen (DE)
(86) Internationale Anmeldenummer: DE9903205
(87) Internationale Veröffentlichungsnummer: WO00021820

(56) Entgegenhaltungen:
- US-A- 5 769 455

## Beschreibung

Die Erfindung betrifft eine Verriegelungsvorrichtung für zwei relativ zueinander verschiebbare Komponenten einer in Höhe und Neigung einstellbaren Kraftfahrzeuglenksäule, wobei eine Komponente an einer ortsfest mit der Karosserie des Fahrzeuges verbundenen Halterung festgelegt und die andere Komponente Bauteil eines die Lenksäule aufnehmenden Lenksäulengehäuses ist, mit mindestens zwei an den zueinander verschieblichen Komponenten jeweils festgelegten Zahnflächen, die miteinander in Eingriff bringbar sind, wie Z. B. aus US-A-5 769 455 bekannt.

Verriegelungsvorrichtungen mit den gattungsbildenden Merkmalen werden in der Automobilindustrie sowohl bei Personenkraftfahrzeugen als auch Lastkraftfahrzeugen zur zeitweiligen Festlegung einer Lenksäule eingesetzt, die vom Fahrer vorher in Höhe und Neigung seinen persönlichen Bedürfnissen entsprechend eingestellt worden ist. Die Festlegung des die Lenksäule aufnehmenden Gehäuses mit der karosseriefesten Halterung ist so auszulegen, daß im verriegelten Zustand der Vorrichtung auch im Falle eines Unfalls trotz hoher Angriffskräfte auf die Lenksäule keinerlei Relativbewegungen zwischen Lenksäulengehäuse und Karosserie auftreten, da derartige Bewegungen die Funktionsweise heute üblicherweise eingesetzter Airbag-Insassenschutzsysteme beeinträchtigen würden. Verriegelungsvorrichtungen mit formschlüssigen Elementen, insbesondere mit ineinandergreifenden als Zahnflächen ausgebildeten Zahnleisten bieten eine zuverlässige und kostengünstige Möglichkeit, die notwendigen Haltekräfte bereitzustellen. Die Verwendung von Zahnleistenpaaren bringt allerdings den systembedingten Nachteil mit sich, daß es Stellungen zwischen Lenksäulengehäuse und karosseriefester Halterung gibt, in der die an den jeweiligen Komponenten angeordneten Zahnleisten sich relativ zueinander in einer "Kopf auf Kopf"-Stellung befinden. In dieser speziellen Stellung kann die Verriegelungsvorrichtung zwar unter Umständen durch den Fahrer festgesetzt werden, es besteht jedoch keine wirkliche Arretierung von Lenksäulengehäuse und karosseriefester Halterung zueinander, so daß im Falle eines Unfalls eine Gefährdung des Fahrers durch eine unkontrollierte Relativbewegung zwischen den Lenksäulenkomponenten nicht ausgeschlossen werden kann.

Aufgabe der vorliegenden Erfindung ist es daher, eine Verriegelungsvorrichtung der gattungsgemäßen Art so weiterzuentwickeln, daß auf einfache und kostengünstige Art ein Übereinanderstehen von Zahnköpfen bei den in den Verriegelungsvorrichtungen verwendeten Zahnleisten unter allen Umständen zuverlässig ausgeschlossen wird.

Diese Aufgabe wird erfindungsgemäß dadurch gelöst, daß die Zahnflächen jeweils mindestens eine Zahnreihe mit mehreren nebeneinander angeordneten Zähnen aufweisen, wobei die einander zugewandten freien Spitzen der Zähne der beiden Reihen durch magnetische Kräfte gegenseitig abgestoßen werden.

Durch diese erfindungsgemäße Gestaltung wird erreicht, daß im Falle des Übereinanderstehens zweier einzelner Zähne der in Eingriff zu bringenden Zahnflächen durch eine seitliche Verschiebebewegung ein automatisches Abrutschen der Zähne der einen Zahnleiste in die Zahnzwischenräume der gegenüberliegenden Zahnleiste, die an der ortsfesten Karosseriehalterung festgelegt ist, stattfindet. Eine stabile Zahn-auf-Zahn-Stellung der gegenüberliegenden Zahnleisten bzw. -flächen ist durch die - durch die magnetischen Kräfte hervorgerufene - Abstoßung zwischen den sich gegenüberliegenden Zahnspitzen somit ausgeschlossen.

Weitere spezielle Ausgestaltungen des Gegenstandes der Erfindung ergeben sich aus den Merkmalen der Unteransprüche.
Die Zahnspitzen der sich gegenüberliegenden Zahnreihen können je nach Bedarf gleiche Nord- oder Süd-Polarität aufweisen, ausschlaggebend für die erfindungsgemäße Funktion ist allein, daß die gleichsinnig polarisierten Zahnspitzen sich durch den aus dem Magnetismus bekannten Abstossungseffekt von Magnetpolen gleichsinniger Polarisation gegenseitig abstoßen.

Es kann darüber hinaus von Vorteil sein, daß die zwischen den einander zugewandten freien Spitzen der Zähne der beiden Zahnreihen liegenden Zahngründe jeweils magnetisch entgegengesetzte Polarität zu den freien Spitzen der Zähne aufweisen. Durch diese erfindungsgemäße Maßnahme wird der Eingreifeffekt der beiden übereinanderliegenden Zahnreihen zueinander durch magnetische Anziehungskräfte unterstützt. Dies geschieht dadurch, daß nach dem Abrutschen der sich abstoßenden Zahnspitzen der sich gegenüberliegenden Zahnreihen in eine benachbarte Zahnlücke Anziehungskräfte zwischen den gegensinnig polarisierten Zahnspitzen und den gegenüberliegenden Zahngründen den Eingreifeffekt der beiden Zahnreihen unterstützen. Sind die Zahnspitzen der Zahnreihen mit einer magnetischen Nord-Polarität belegt, so führt die gegensinnige Polarisierung mit einer Süd-Polarität zu einer Anziehungskraft dieser gegensinnigen magnetischen Pole beim Ineinandergreifen der Zahnreihen.

Es kann darüber hinaus zweckmäßig sein, im Rahmen der Funktionstrennung die Funktionen des Zahneingriffs der Zahnreihen und die hieraus resultierende Bereitstellung der geforderten Haltekräfte von der Funktion, auf einfache und kostengünstige Art ein Übereinanderstehen der Zahnköpfe zu verhindern, zu trennen. Dies kann erfindungsgemäß dadurch geschehen, daß den miteinander in Eingriff bringbaren Zahnflächen benachbart an der beweglichen Komponente und an der ortsfesten Halterung für die Lenksäule an der Karosserie übereinander zwei mit Einzelmagneten versehene Magnetleisten vorgesehen sind, wobei die Einzelmagnete beabstandet in einer einer halben Zahnteilung der nebeneinander angeordneten Zähne der Zahnleisten entsprechenden Distanz angeordnet sind und wobei die Einzelmagnete gleichsinnig polarisiert sind. Diese spezielle Ausgestaltung des Gegenstandes der Erfindung läßt sich besonders kostengünstig realisieren. Die neben den Zahnleisten angeordneten Magnetleisten können mit handelsüblichen Kleinmagneten bestückt werden. Bei der Anordnung der Einzelmagnete ist nur darauf zu achten, daß die Einzelmagnete der beiden sich gegenüberliegenden Magnetleisten mit ihrer gleichsinnigen Polarisierung in dem Moment übereinanderstehen, indem auch eine Kopf-auf-Kopf-Stellung der Zahnleisten gegeben ist. In dieser Stellung werden sich durch die gleichsinnige Polarisierung der Einzelmagnete diese abstoßen und somit gleichzeitig durch eine seitliche Relativbewegung eine Versetzung der Zahnleisten zueinander bewirken, so daß eine Kopf-auf-Kopf-Stellung der Zahnspitzen nicht mehr gegeben ist. Die beabstandete Anordnung der Einzelmagnete innerhalb der Magnetleisten erlaubt ein Ineinandergreifen der Einzelmagnete ebenso wie ein Ineinandergreifen der Zahnreihen während des Verriegelungsvorganges, so daß nach dessen Abschluß ein zuverlässiger Zahneingriff der Zahnleisten untereinander gewährleistet ist.

Im folgenden werden zwei Ausführungsbeispiele des Gegenstandes der Erfindung anhand der beigefügten Zeichnungen näher erläutert. Es zeigen:
- Figur 1: ein erstes Ausführungsbeispiel einer Verriegelungsvorrichtung der erfindungsgemäßen Art in Seitenansicht,
- Figur 2: die Verriegelungsvorrichtung aus Figur 1 entsprechend der Schnittlinie BB aus Figur 1 in einer Schnittdarstellung von oben;
- Figuren 3a und b: eine vergrößerte Seitenansicht der gegenüberliegenden Zahnreihen entsprechend dem Detail D aus Figur 1 in zwei unterschiedlichen Ausführungsvarianten;
- Figur 4: eine Detailansicht entsprechend dem Detail D aus Figur 1 bzw. der vergrößerten Darstellung aus Figur 3b im Eingriffszustand der sich gegenüberliegenden Zahnleisten;
- Figur 5: eine zweite Ausgestaltungsvariante der erfindungsgemäßen Verriegelungsvorrichtung in Seitenansicht;
- Figur 6: eine Draufsicht in Schnittdarstellung entsprechend der Linie CC aus Figur 5;
- Figuren 7a und b: eine Vorderansicht der Verriegelungsvorrichtung aus Figur 5 entsprechend dem Pfeil A in unverriegeltem und verriegeltem Zustand.

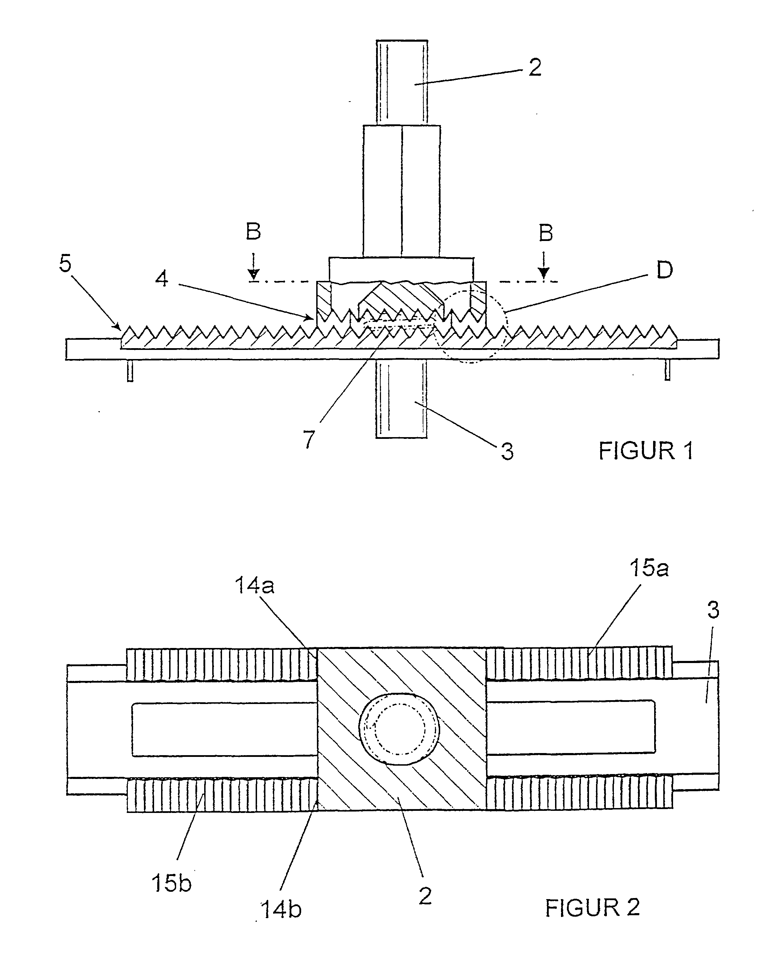

Die in **Figur 1** dargestellte erfindungsgemäße Verriegelungsvorrichtung weist zwei zueinander verschiebbare Komponenten 2, 3 einer in Höhe und Neigung einstellbaren Kraftfahrzeuglenksäule auf, wobei die Komponente 2 an einem hier nicht näher dargestellten Lenksäulengehäuse befestigt ist, welches die einstellbare Kraftfahrzeuglenksäule aufnimmt. Die Komponente 3 ist an einer aus Gründen der Übersichtlichkeit nicht näher ausgeführten karosseriefesten Halterung eines Kraftfahrzeuges angeordnet. Beide Komponenten 2 und 3 besitzen einander gegenüberstehende Zahnflächen 4 und 5, die durch einen aus dem Stand der Technik bekannten Hebelmechanismus der Verriegelungsvorrichtung miteinander in Eingriff gebracht werden können, so daß sich eine formschlüssige feste Verbindung zwischen dem beweglichen Lenksäulengehäuse und der karosseriefesten Halterung ergibt.

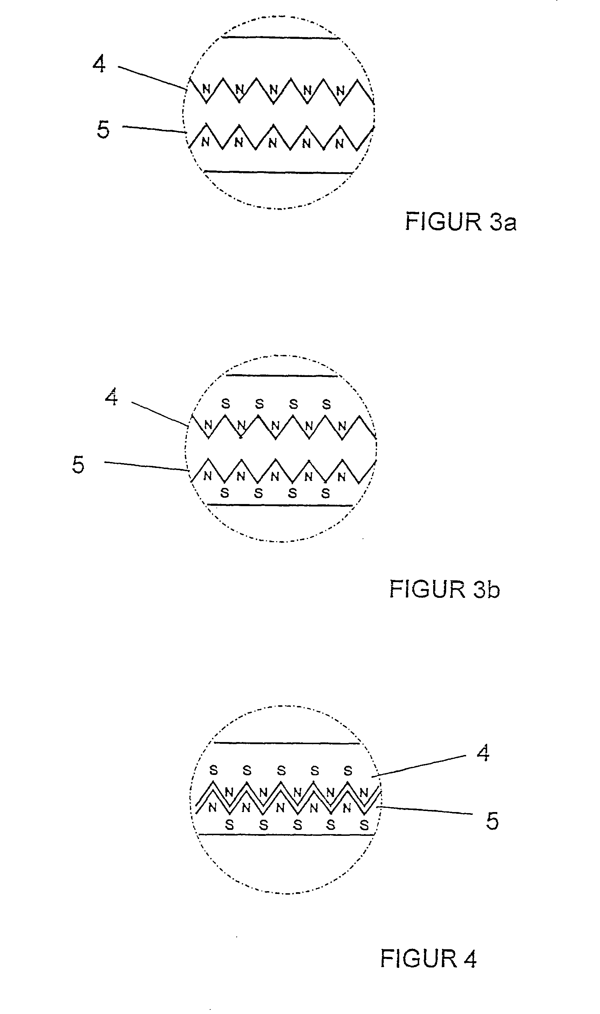

Wie aus **Figur 2** deutlich wird, werden die Zahnflächen 4 und 5 jeweils aus zwei Zahnreihen 14a, 14b und 15a, 15b gebildet. Diese Zahnreihen weisen nebeneinanderliegende Einzelzähne auf. Im unverriegelten Zustand werden die sich gegenüberliegenden Zahnreihen 14a, 14b, 15a und 15b durch ein Federelement 7 in Form einer Schraubenfeder auseinandergedrückt. Im Rahmen der Einstellung der verschiebbaren Komponente 2 der Lenksäule gegenüber der ortsfesten Halterung 3 kann der Fall eintreten, daß die einzelnen Zähne der einander gegenüberliegenden Zahnreihen der Zahnflächen 4 und 5 mit ihren Zahnspitzen genau übereinander stehen. In einer derartigen Stellung ist eine Verriegelung der Komponenten 2 und 3 zur Bereitstellung entsprechender Haltekräfte nicht möglich. Die erfindungsgemäße Ausgestaltung zur Verhinderung einer derartigen Situation sieht vor, daß die Zahnspitzen der einzelnen Zähne eine gleichsinnige magnetische Polarität aufweisen. Dies ist schematisch in der **Figur 3a** dargestellt, in der die einzelnen Zahnspitzen mit dem Symbol N stellvertretend für eine magnetische Nord-polarisation gekennzeichnet sind. Durch die magnetischen Abstoßungskräfte gleichsinniger Magnetpole werden die Zahnspitzen erfindungsgemäß gegeneinander abgestoßen, was dazu führt, daß bereits bei einer Annäherung der Zahnreihen aneinander im Rahmen des Verriegelungsvorganges ein Hineingleiten der beweglichen Zahnfläche 4 der Komponente 2 in die Zahnzwischenräume der festen Zahnfläche 5 der Komponente 3 stattfindet. Dieser Einführungseffekt der Zahnspitzen einer Zahnfläche in die Zahnzwischenräume der gegenüberliegenden Zahnfläche kann zusätzlich durch die Maßnahme unterstützt werden, daß die zwischen den einzelnen Zähnen liegenden Zahngründe mit einer zur Polarität der Zahnspitzen gegensätzlichen magnetischen Polarität versehen werden. Eine derartige Ausgestaltung ist schematisch in den **Figuren 3b und 4** dargestellt. Aus diesen **Figuren** ist ersichtlich, daß die Zahnspitzen jeweils eine magnetische Nordorientierung aufweisen, wohingegen die zwischenliegenden Zahngründe mit einer magnetischen Süd-Polarität versehen sind. Die gleichsinnige Polarität der Zahnspitzen führt analog zur **Figur 3a** zu einem Abstossungsefffekt der Zahnspitzen untereinander. Dieser Abstossungseffekt führt automatisch zu einer versetzten Anordnung der sich gegenüberliegenden Zahnflächen 4 und 5, so daß ein Ineinandergreifen der einzelnen Zähne möglich ist. Der Eingreifeffekt wird beim Ineinandergleiten der Zahnflächen durch die magnetische Anziehungskraft zwischen der magnetischen Nord-Polarisierung der Zahnspitzen und der demgegenüber mit einer Süd-Polarität versehenen Zahngründe unterstützt. In der **Figur 4** sind die Zahnflächen 4 und 5 in ihrer Eingreifstellung dargestellt, in der die Anziehungskraft zwischen den Süd- und Nord-Polaritäten von Zahngründen und Zahnspitzen naturgemäß am größten ist.

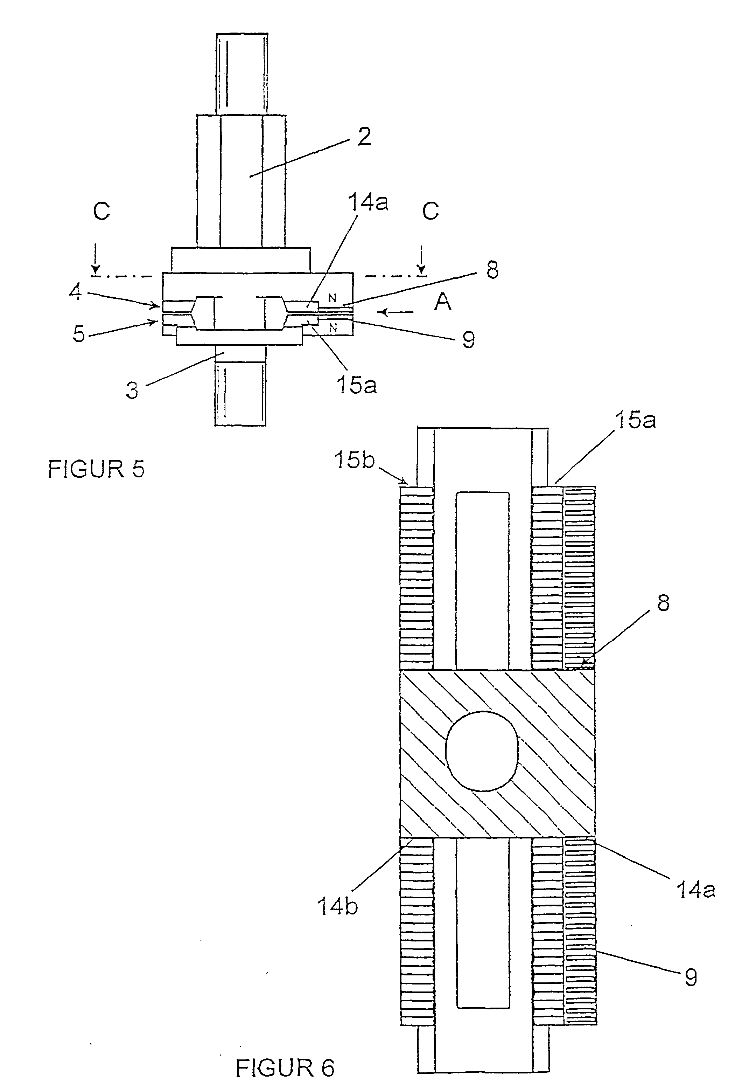

Die **Figuren 5 - 7** zeigen eine weitere Ausführungsvariante des Gegenstandes der Erfindung. Soweit die Bauteile der zweiten Ausführungsvariante mit denjenigen des Ausführungsbeispieles der **Figuren 1 - 5** entsprechen, sind für die Bauteile beide Ausführungsvarianten die gleichen Bezugsziffern gewählt.

Entsprechend der Ausführungsvariante 1 weist die Verriegelungsvorrichtung aus **Figur 5** ebenfalls eine Zahnfläche 4 an der beweglichen Komponente 2 einer Kraftfahrzeuglenksäule auf. An der karosseriefesten Komponente 3, welche üblicherweise als Lenksäulenhalterung gestaltet ist, befindet sich die Zahnfläche 5. Die Zahnflächen 4 und 5 sind wiederum in zwei nebeneinander angeordneten Zahnreihen 14a, 14b bzw. 15a, 15b aufgeteilt, die über eine aus dem Stand der Technik bekannte Betätigungsvorrichtung miteinander in Eingriff bringbar sind.

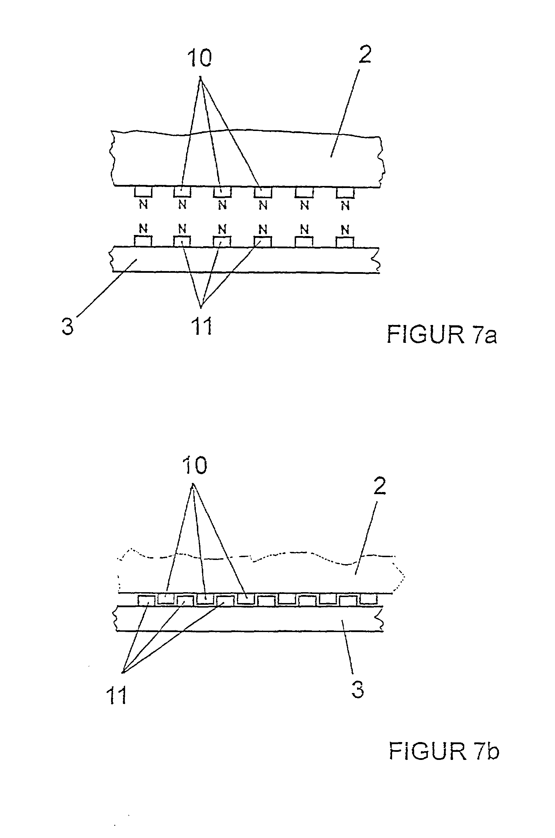

Aus den **Figuren 5 und 6** wird deutlich, daß sich benachbart der Zahnreihen 14a und 15a zwei Magnetleisten 8 und 9 befinden, wobei die Magnetleiste 8 mit der beweglichen Komponente 2 fest verbunden ist, wohingegen die Magnetleiste 9 an der karosseriefesten Komponente 9 festgelegt ist. Beide Magnetleisten 8 und 9 weisen beabstandet zueinander angeordnete Einzelmagnete 10 und 11 auf, wie dies aus den **Figuren 7a und 7b** deutlich wird. Die Einzelmagnete 10 und 11 bestehen aus handelsüblichen, länglichen Magneten, wobei die Unterseiten der Magnete 10 der zur Komponente 2 gehörenden Magnetleiste 8 mit einer Nord-Polarität versehen sind, wohingegen die der Unterseiten der Magnete 10 zugewandten Oberseiten der Einzelmagnete 11 der zur festen karosserieseitigen Komponente 3 gehörenden Magnetleiste 9 ebenfalls eine magnetische Nord-Polarität aufweisen. Der Abstand zwischen den Einzelmagneten 10 bzw. 11 der Magnetleisten 8 und 9 ist so gewählt, daß er einer halben Zahnteilung von nebeneinander angeordneten Zähnen der Zahnleisten 15a bzw. 14a entspricht.

Tritt nun im Rahmen der Einstellung der verschiebbaren Kraftfahrzeuglenksäule der Fall ein, daß die miteinander in Eingriff zu bringenden Zahnflächen 4 und 5 so zueinander liegen, daß die zugehörigen Zähne eine sogen. Kopf-auf-Kopf-Stellung einnehmen, so befinden sich auch die benachbarten Magnetleisten mit ihren Einzelmagneten 10 bzw. 11 direkt übereinander. Die Abstossung der jeweiligen magnetischen Nord-Polaritäten der übereinander befindlichen Magnetleisten 8 und 9 führt dazu, daß sich die bewegliche Komponente 2 gegenüber der karosserieseitig festgelegten Komponente 3 so seitlich verschiebt, daß die bestehende Kopf-auf-Kopf-Stellung der zugehörigen Zahnreihen 4 und 5 beseitigt wird. Die übereinanderstehenden Zahnreihen können somit ineinandergleiten, wobei gleichzeitig durch die beabstandete Anordnung der Einzelmagnete 10 und 11 ebenfalls ein Ineinandergleiten der Magnetleisten 8 und 9 möglich ist. In der **Figur 7b** ist zur Verdeutlichung die Verriegelungsposition der erfindungsgemäßen Verriegelungseinrichtung dargestellt, in der die beiden Zahnflächen 4 und 5 formschlüssig miteinander verbunden sind.

Die in den Ausführungsbeispielen 1 und 2 in verschiedener Ausgestaltung bereitgestellten Magnetkräfte vermeiden somit auf einfache und zuverlässige Weise eine bei den heute üblichen Verriegelungsvorrichtungen unter Umständen mögliche Zahn-auf-Zahn-Stellung der zugehörigen Zahnflächen. Die im Ausführungsbeispiel 2 verwendeten Einzelmagnete sind insbesondere unter produktionstechnischen und wirtschaftlichen Gesichtspunkten eine besonders vorteilhafte Ausgestaltungsvariante des Gegenstandes der Erfindung.

### Bezugszeichenliste:

- 2 -: Komponente
- 3 -: Komponente
- 4 -: Zahnfläche
- 5 -: Zahnfläche
- 7 -: Federelement
- 8 -: Magnetleiste
- 9 -: Magnetleiste
- 10 -: Einzelmagnet
- 11 -: Einzelmagnet
- 14a -: Zahnreihe
- 14b -: Zahnreihe
- 15a -: Zahnreihe
- 15b -: Zahnreihe

## Patentansprüche

1. Verriegelungsvorrichtung für zwei relativ zueinander verschiebbare Komponenten einer in Höhe und Neigung einstellbaren Kraftfahrzeuglenksäule, wobei eine Komponente an einer ortsfest mit der Karosserie des Kraftfahrzeuges verbundenen Halterung festgelegt und die andere Komponente Bauteil eines die Lenksäule aufnehmenden Lenksäulengehäuses ist, mit mindestens zwei an den zueinander verschieblichen Komponenten jeweils festgelegten Zahnflächen, die miteinander in Eingriff bringbar sind,
**dadurch gekennzeichnet, daß**
die Zahnflächen (4, 5) jeweils mindestens eine Zahnreihe (14a, 15a) mit mehreren nebeneinander angeordneten Zähnen aurweisen, wobei die einander zugewandten freien Spitzen der Zähne der beiden Reihen (14a, 15a) durch magnetische Kräfte gegenseitig abgestoßen werden.

2. Verriegelungsvorrichtung nach Anspruch 1,
**dadurch gekennzeichnet, daß**
die einander zugewandten freien Spitzen der Zähne der beiden Reihen jeweils gleichsinnige magnetische Nord-Polarität aufweisen.

3. Verriegelungsvorrichtung nach Anspruch 1,
**dadurch gekennzeichnet, daß**
die einander zugewandten freien Spitzen der Zähne der beiden Reihen jeweils gleichsinnige magnetische Süd-Polarität aufweisen.

4. Verriegelungsvorrichtung nach einem der Ansprüche 2 oder 3
**dadurch gekennzeichnet, daß**
die zwischen den einander zugewandten freien Spitzen der Zähne der beiden Reihen liegenden Zahngründe jeweils magnetisch entgegengesetzte Polarität zu den freien Spitzen der Zähne aurweisen.

5. Verriegelungsvorrichtung nach Anspruch 4,
**dadurch gekennzeichnet, daß**
die einander zugewandten freien Spitzen der Zähne der beiden Reihen jeweils gleichsinnige magnetische Nord-Polarität und die zwischen den Spitzen angeordneten Zahngründe jeweils gleichsinnige Süd-Polarität aufweisen.

6. Verriegelungsvorrichtung nach Anspruch 4,
**dadurch gekennzeichnet, daß**
die einander zugewandten freien Spitzen der Zähne der beiden Reihen jeweils gleichsinnige magnetische Süd-Polarität und die zwischen den Spitzen angeordneten Zahngründe jeweils gleichsinnige Nord-Polarität aurweisen.

7. Verriegelungsvorrichtung nach Anspruch 1,
**dadurch gekennzeichnet, daß**
den miteinander in Eingriff bringbaren Zahnflächen (4, 5) benachbart an der beweglichen Komponente (2) und an der ortsfesten Halterung (3) übereinander zwei mit Einzelmagneten (10, 11) versehene Magnetleisten (8, 9) vorgesehen sind, wobei die Einzelmagnete (10, 11) beabstandet in einer einer halben Zahnteilung der nebeneinander angeordneten Zähne entsprechenden Distanz angeordnet sind und wobei die Einzelmagnete (10, 11) gleichsinnig polarisiert sind.

## Claims

1. Locking device for two components, which can be displaced relative to one another, of a motor vehicle steering column which can be adjusted in height and inclination, one component being fixed to a mounting arrangement connected in a stationary manner to the body of the motor vehicle and the other component being a structural part of a steering column housing which receives the steering column, the said device having at least two toothed faces fixed, in each case, to the components that can be displaced in relation to one another, which faces can be brought into engagement with one another,
**characterised in that**
the toothed faces (4, 5) each have at least one row of teeth (14a, 15a) having a plurality of teeth disposed side by side, the free tips, that face towards one another, of the teeth of the two rows (14a, 15a) being mutually repelled by magnetic forces.

2. Locking device according to claim 1,
**characterised in that**
the free tips, that face towards one another, of the teeth of the two rows each have equidirectional magnetic north polarity.

3. Locking device according to claim 1,
**characterised in that**
the free tips, which face towards one another, of the teeth of the two rows each have equidirectional magnetic south polarity.

4. Locking device according to one of claims 2 or 3,
**characterised in that**
the tooth roots which lie between those free tips, that face towards one another, of the teeth of the two rows of teeth each have magnetically opposite polarity to the free tips of the teeth.

5. Locking device according to claim 4,
**characterised in that**
the free tips, that face towards one another, of the teeth of the two rows each have equidirectional magnetic north polarity and the tooth roots disposed between the tips each have equidirectional south polarity.

6. Locking device according to claim 4,
**characterised in that**
the free tips, that face towards one another, of the teeth of the two rows each have equidirectional magnetic south polarity and the tooth roots disposed between the tips each have equidirectional north polarity.

7. Locking device according to claim 1,
**characterised in that**
that two magnetic strips (8, 9) provided with individual magnets (10, 11) are provided, above one another and adjoining the toothed faces (4, 5) which can be brought into engagement with one another, on the movable component (2) and on the stationary mounting arrangement (3), the said individual magnets (10, 11) being disposed so as to be spaced apart at a distance corresponding to half the tooth pitch of the teeth which are disposed side by side, and the said individual magnets (10, 11) being polarised in an equidirectional manner.

## Revendications

1. Dispositif de verrouillage pour deux composants coulissants l'un par rapport à l'autre d'une colonne de direction de véhicule automobile réglable en hauteur et en inclinaison, un composant étant fixé à un support relié de manière fixe à la carrosserie du véhicule automobile et l'autre composant étant un élément d'un boîtier de colonne de direction recevant la colonne de direction, avec au moins deux surfaces dentées qui sont fixées respectivement à chacun des composants coulissants l'un par rapport à l'autre et qui peuvent être amenées en prise l'une avec l'autre,
**caractérisé en ce que**
les surfaces dentées (4, 5) comportent chacune une rangée de dents (14a, 15a) avec plusieurs dents disposées les unes à côté des autres, les sommets libres en vis-à-vis des dents des deux rangées (14a, 15a) étant repoussés mutuellement par des forces magnétiques.

2. Dispositif de verrouillage selon la revendication 1,
**caractérisé en ce que**
les sommets libres en vis-à-vis des dents des deux rangées présentent chacun une polarité magnétique nord de même sens.

3. Dispositif de verrouillage selon la revendication 1,
**caractérisé en ce que**
les sommets libres en vis-à-vis des dents des deux rangées présentent chacun une polarité magnétique sud de même sens.

4. Dispositif de verrouillage selon l'une des revendications 2 ou 3,
**caractérisé en ce que**
les fonds de dent situés entre les sommets libres en vis-à-vis des dents des deux rangées présentent chacun une polarité magnétiquement opposée à celle des sommets libres des dents.

5. Dispositif de verrouillage selon la revendication 4,
**caractérisé en ce que**
les sommets libres en vis-à-vis des dents des deux rangées présentent chacun une polarité magnétique nord de même sens et les fonds de dents disposés entre les sommets présentent chacun une polarité sud de même sens.

6. Dispositif de verrouillage selon la revendication 4,
**caractérisé en ce que**
les sommets libres en vis-à-vis des dents des deux rangées présentent chacun une polarité magnétique sud de même sens et les fonds de dents disposés entre les sommets présentent chacun une polarité nord de même sens.

7. Dispositif de verrouillage selon la revendication 1,
**caractérisé en ce que**
au voisinage des surfaces dentées (4, 5) pouvant être amenées en prise l'une avec l'autre, sont prévues l'une au-dessus de l'autre, sur le composant mobile (2) et sur le support fixe (3), deux barrettes magnétiques (8, 9) munies d'aimants individuels (10, 11), les aimants individuels (10, 11) étant disposés l'un par rapport à l'autre à une distance correspondant à un demi-pas de dent des dents disposées les unes à côté des autres, et les aimants individuels (10, 11) étant polarisés dans le même sens.
